# EUROPÄISCHE PATENTSCHRIFT

(11) **EP 2 518 346 B1**
(45) Veröffentlichungstag und Bekanntmachung des Hinweises auf die Patenterteilung: **07.08.2019**
(21) Anmeldenummer: 12165005.5
(22) Anmeldetag: 20.04.2012
(51) Int. Cl.: F16C 29/06, F16C 33/40

(54) **Konzept zur Rückführung von Wälzkörpern in einem Führungswagen einer wälzgelagerten Linearführung**
Concept for returning rolling elements in a guide carriage of a linear rolling bearing
Concept de récupération de corps de roulement dans un chariot de guidage d'un palier à roulement linéaire

(30) Priorität: 29.04.2011 DE 102011017756
(43) Veröffentlichungstag der Anmeldung: 31.10.2012
(73) Patentinhaber: Aktiebolaget SKF, 415 50 Göteborg (SE)
(72) Erfinder: Edelmann, Ludwig, 97717 Sulzthal (DE); Hofmann, Joachim, 97456 Dittelbrunn (DE); Jeschka, Erwin, 97711 Maßbach (DE); Kemmer, Martin, 97440 Werneck (DE); Velde, Henryk, 97440 Werneck (DE)
(74) Vertreter: Schonecke, Mitja

(56) Entgegenhaltungen:
- DE-B- 1 258 670
- FR-A- 506 969
- US-A- 4 643 591

## Beschreibung

Die Erfindung betrifft Vorrichtungen und Verfahren zur Rückführung von Wälzkörpern in einem Führungswagen einer wälzgelagerten Linearführung.

Unter einer Linearführung versteht man im Allgemeinen eine Anordnung, die eine möglichst reibungsfreie Translation einer oder mehrerer beweglicher Baugruppen einer Maschine ermöglicht und dabei gleichzeitig eine Einhaltung der Bewegungsrichtung in Form einer linearen Bahn garantiert. Man kann Linearführungen nach ihrer Lagerung in Gleitführungen und Wälzführungen unterteilen. Wälzführungen beruhen auf dem Prinzip der Umwälzung von Wälzkörpern zwischen zwei bewegten Führungselementen. Als Wälzkörper dienen wie beim Wälzlager beispielsweise Kugeln, Rollen, Nadeln oder andere Wälzkörper. Zu den Wälzführungen gehören u. a Profilschienenführungen oder auch Linearführungen. Hierbei sind Linearführungen nicht auf ausschließlich lineare Bewegungen beschränkt. Sie ermöglichen vielmehr eine translatorische Bewegung im Vergleich zu rotatorischen Bewegungen, die durch entsprechende Rotationswälzlager geführt werden. Gerade im Bereich der Linearlager werden die Begriffe "linear" und "translatorisch" daher häufig synonym verwendet.

Mit Hilfe von Linearführungen lassen sich präzise Translationsbewegungen in vielfältigen Anwendungssituationen realisieren. Eine Linearführung weist im Allgemeinen eine Führungsschiene und einen Linear- bzw. Führungswagen auf, der linear beweglich auf der Führungsschiene angeordnet ist. Insbesondere in Anwendungssituationen, bei denen die Amplitude der Linearbewegung in der Größenordnung der Außenabmessungen des Führungswagens parallel zur Bewegungsrichtung liegt oder diese sogar übersteigt werden häufig sogenannte Kugelumlaufführungen eingesetzt. Eine Kugelumlaufführung zeichnet sich dadurch aus, dass der Führungswagen mittels Kugeln relativ zur Führungsschiene beweglich gelagert ist und dass die Kugeln auf einer in sich geschlossenen, also quasi endlosen Bahn umlaufen. Eine Kugelumlaufführung ermöglicht somit eine beliebige lineare Beweglichkeit des Linearwagens, die nur durch die Abmessungen der Führungsschiene und ggf. durch eine Einbauumgebung begrenzt wird

Bei den sogenannten Profilschienenführungen umgreift der Führungswagen, der auch als Laufwagen bezeichnet wird, mit einem im Wesentlichen U-förmigen Querschnitt eine profilierte Führungs- bzw. Profilschiene. Der Führungswagen ist dabei auf der Führungsschiene wälzgelagert. In anderen Worten ausgedrückt bildet der Führungswagen einen äußeren Führungsteil der Linearführung und die Führungsschiene einen inneren Führungsteil der Linearführung, wobei sich inneres und äußeres Führungsteil gegenseitig über Wälzkörper abstützen.

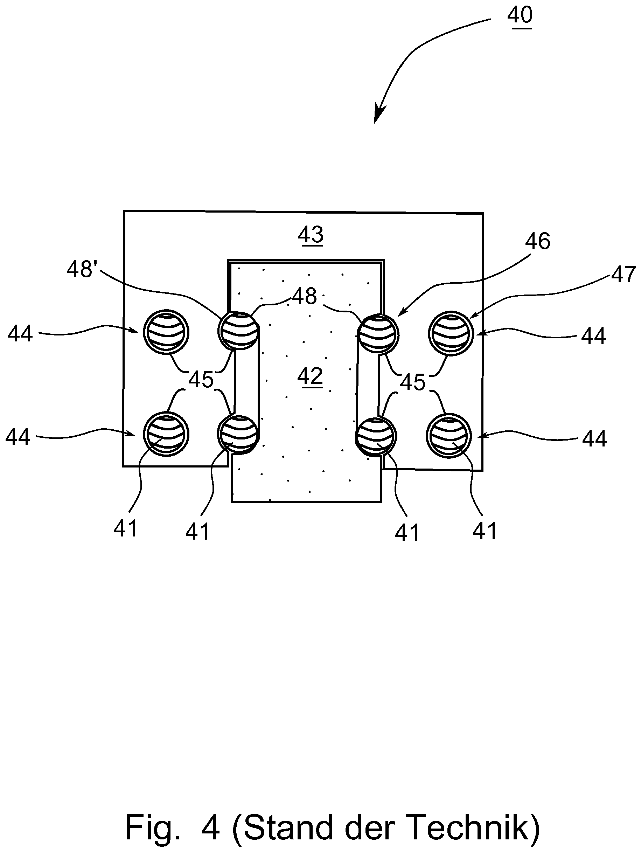

Fig. 4 zeigt zur Veranschaulichung eine schematische Querschnittsdarstellung einer als Profilschienenführung 40 ausgebildeten herkömmlichen Linearführung, bei der beispielsweise als Kugeln ausgebildete Wälzkörper 41 vorgesehen sind.

Die Profilschienenführung 40 umfasst ein als Profilschiene ausgebildetes inneres Führungsteil 42, welches von einem als Führungs- oder Laufwagen 43 ausgebildeten äußeren Führungsteil bügelartig bzw. U-förmig umgriffen wird. In dem in Fig. 4 gezeigten Beispiel stützen sich Führungswagen 43 und Profilschiene 42 über insgesamt vier Wälzkörperreihen 44 gegeneinander ab, wobei sowohl links- als auch rechtsseitig der Profilschiene 42 jeweils zwei Wälzkörperreihen übereinander angeordnet liegen. Linearführungen mit vier Wälzkörperreihen werden im Nachfolgenden als vierreihige Linearführungen bezeichnet. Die Wälzkörperreihen 44 laufen in seitlich der Profilschiene 42 angeordneten und in Längs- oder Verschieberichtung O-förmig umlaufenden Wälzkörperkanälen 45 endlos um. Die Wälzkörperkanäle 45 bestehen jeweils aus einem sogenannten Tragbereich 46, einem Rücklaufbereich 47 und zwei nicht explizit dargestellten stirnseitigen Umlenkbereichen. Die Tragbereiche 46 weisen jeweils eine profilschienenseitige und eine tragkörperseitige Wälzkörperlaufbahn 48, 48' auf, deren Kontur jeweils auf die sphärische Oberfläche der kugelförmigen Wälzkörper 41 angepasst ist. Seitlich können die Kugeln 41 zusammen mit einem sie haltenden Lagerkäfig durch entsprechend ausgebildete Seitenwände der Wälzkörperkanäle 45 geführt werden, so dass ein Querschnittsprofil der Wälzkörperkanäle 45 dem der Kugeln 41 angepasst ist.

Die Rücklaufbereiche 47 können gemäß dem Stand der Technik und so, wie es in Fig. 4 angedeutet ist, beispielsweise durch Bohrungen in dem Führungswagen 43 selbst realisiert werden. Des Weiteren sind auch außenliegende Rückführungen, d.h. um einen (massiven) Körper des Führungswagens 43 herum, bekannt. Bei der Variante mit Rücklaufbohrungen müssen die Bohrungen durch den massiven Führungswagenkörper jedoch mittels eines aufwendigen Tiefbohrverfahrens, meistens von zwei Seiten aus, hergestellt werden. Die Variante mit außen geführter Rückführung ist demgegenüber zwar kostengünstiger und auch einfacher zu montieren. Allerdings fällt bei außen geführten Rückführungen der massive Wagenkörper zwischen den links- und rechtsseitig außenliegenden Rücklaufbereichen entsprechend schmaler aus, was einen Steifigkeitsverlust des Führungswagen und damit der gesamten Linearführung zur Folge hat.

Gattungsgemäße Linearführungen mit Wälzkörperrücklaufkanälen, die zwischen den beiden Endbereichen eine von einer Führungsschiene wegweisende Wölbung aufweisen, sind beispielsweise aus den Druckschriften DE 1 258 670 B, FR 506 969 A und US 4 643 591 A bekannt.

Daher besteht die Aufgabe der vorliegenden Erfindung darin, ein gegenüber dem Stand der Technik verbessertes Konzept zur Rückführung von Wälzkörpern samt Lagerkäfigen an einem Führungswagen einer wälzgelagerten Linearführung bereitzustellen.

Die Erkenntnis der vorliegenden Erfindung besteht darin, eine für einen Führungswagen steifigkeitserhaltende, außerhalb des Führungswagens geführte Wälzkörperrückführung vorzusehen, bei der die Wälzkörper einer endlos umlaufenden Wälzkörperreihe zusammen mit ihrem Käfig in einem außenliegenden und um einen massiven, steifigkeitserhöhenden Mittelabschnitt des Führungswagens herum gewölbten Wälzkörperrücklaufkanal von einem ersten Umlenkbereich zu einem zweiten Umlenkbereich zurückgeführt werden.

Gemäß Aspekten der Erfindung sind dazu Verfahren zur Rückführung von Wälzkörpern in einem Führungswagen einer wälzgelagerten Linearführung mit den Merkmalen des Verfahrensanspruchs 7 bzw. mit den Merkmalen des Verfahrensanspruchs 8 vorgesehen. Bei beiden Verfahren weist der Führungswagen einen Wälzkörperkanal für eine endlos umlaufende Wälzkörperreihe auf, wobei die Wälzkörper der Wälzkörperreihe auf einer gekrümmten Bahn um eine steifigkeitserhöhende Anordnung des Führungswagens herum zurückgeführt werden.

Gemäß einem weiteren Aspekt der vorliegenden Erfindung ist nach Anspruch 1 eine Wälzkörperrückführung für einen Führungswagen einer wälzgelagerten Linearführung vorgesehen, mit einem Wälzkörperrücklaufkanal mit einem ersten Endbereich, in welchen Wälzkörper aus einem ersten Wälzkörperumlenkbereich einlaufen können, und einem zweiten Endbereich, aus welchem Wälzkörper in einen zweiten Wälzkörperumlenkbereich auslaufen können, wobei der Wälzkörperrücklaufkanal zwischen dem ersten und dem zweiten Endbereich in montiertem Zustand eine von einer Führungsschiene der Linearführung wegweisende Wölbung aufweist, so dass der Wälzkörperrücklaufkanal um eine steifigkeitserhöhende Anordnung des Führungswagens herum angeordnet werden kann.

Der Wälzkörperrücklaufkanal der Wälzkörperrückführung wird also außen um einen z. B. massiven Mittelabschnitt des Führungswagens herum geführt. Ein dem massiven Mittelabschnitt des Führungswagens zugeordneter und nach außen gewölbter Mittenbereich des Wälzkörperrücklaufkanals verläuft dabei in einem, einem Wölbungsradius entsprechenden, Abstand parallel zu den beiden Endbereichen des Wälzkörperrücklaufkanals. Dabei ist der Mittenbereich des Wälzkörperrücklaufkanals an seinen beiden Enden jeweils mittels eines Verbindungsabschnitts des Wälzkörperrücklaufkanals mit dem jeweiligen Endbereich des Wälzkörperrücklaufkanals verbunden. Eine geometrische Form der Wölbung, d. h. die Form des Mittenbereichs und/oder der Verbindungsabschnitte, ist an eine Geometrie der steifigkeitserhöhenden Anordnung des Führungswagens angepasst.

Der Wälzkörperrücklaufkanal der Wälzkörperrückführung kann dabei in vorteilhafterweise aus einem leichten Kunststoff, beispielsweise mittels Spritzguss, gefertigt sein. Dies ermöglicht zum einen eine kostengünstige Herstellung, sowie eine Gewichtsersparnis der außen liegenden und gekrümmten Wälzkörperrückführung.

Gemäß einem weiteren Aspekt der vorliegenden Erfindung ist nach Anspruch 4 auch ein Führungswagen für eine wälzgelagerte Linearführung vorgesehen, mit einem umlaufenden Wälzkörperkanal für eine darin umlaufende Wälzkörperreihe. Der umlaufende Wälzkörperkanal des Führungswagens weist einen außerhalb eines Körpers bzw. Korpus des Führungswagens verlaufenden Wälzkörperrücklaufkanal auf, mit einem ersten Endbereich, in welchem Wälzkörper aus einem ersten Wälzkörperumlenkbereich einlaufen können, und mit einem zweiten Endbereich, aus welchem Wälzkörper in einen zweiten Wälzkörperumlenkbereich auslaufen können. Der Wälzkörperrücklaufkanal weist zwischen dem ersten und dem zweiten Endbereich eine von einer Führungsschiene der Linearführung wegweisende Wölbung bzw. Krümmung auf, so dass der Wälzkörperrücklaufkanal um eine steifigkeitserhöhende Anordnung bzw. ein massives Mittelteil des Korpus des Führungswagens herum angeordnet verläuft. Der Wälzkörperrücklaufkanal ist dabei derart geformt, dass die Endbereiche des Wälzkörperrücklaufkanals innerhalb eines (schmaleren) Bereichs des Führungswagens zwischen links- und rechtsseitig der Führungsschiene angeordneten Montage- bzw. Befestigungsbohrungen verlaufen. Der gewölbte Mittenbereich des Wälzkörperrücklaufkanals wird dagegen um die steifigkeitserhöhende Anordnung, d. h. um den massiven Mittelabschnitt des Führungswagens herum, außerhalb des schmalen bzw. schlanken Bereichs des Führungswagens geführt.

Die steifigkeitserhöhende Anordnung des Führungswagens kann beispielsweise einen materialverstärkenden Bereich zwischen einem Lastkanal und dem Wälzkörperrücklaufkanal des Führungswagens bedeuten. Der außen herum geführte Wälzkörperrücklaufkanal kann dabei, wie es oben bereits erwähnt wurde, beispielsweise aus einem leichten und kostengünstig herzustellen Kunststoff gefertigt sein.

Weitere vorteilhafte Ausführungsbeispiele und Weiterbildungen des erfindungsgemäßen Konzepts ergeben sich aus den abhängigen Ansprüchen.

Ein Vorteil der vorliegenden Erfindung besteht darin, dass bei der Herstellung von Führungswagen bzw. -schlitten für Linearsysteme aufwändige Rücklaufbohrungen durch einen massiven Stahlkorpus der Führungswagen eingespart werden können. Durch die geschickte Rückführung der Wälzkörper mittels eines außen geführten, gekrümmten Wälzkörperrücklaufkanals um ein steifigkeitserhöhendes Mittelteil des Führungswagenkorpus herum kann gleichzeitig eine vorbestimmte Steifigkeit des Führungswagens beibehalten bzw. erreicht werden.

Ausführungsbeispiele der vorliegenden Erfindung werden nachfolgend bezugnehmend auf die beiliegenden Figuren näher erläutert. Es zeigen:
- Fig. 1: eine gekrümmte bzw. gewölbte Wälzkörperrückführung für einen Führungswagen, gemäß einem Ausführungsbeispiel der vorliegenden Erfindung;
- Fig. 2a: eine isometrische Ansicht einer Linearführung mit einem Führungswagen mit gekrümmter Wälzkörperrückführung gemäß einem Ausführungsbeispiel der vorliegenden Erfindung;
- Fig. 2b: einen Querschnitt durch eine Anschraubbohrungs-Ebene eines Führungswagens gemäß Fig. 2a;
- Fig. 2c: einen Querschnitt durch eine Wagenmitte des Führungswagens gemäß Fig. 2a und Fig. 2b;
- Fig. 3: eine Explosionsansicht der Linearführung gemäß Fig. 2; und
- Fig. 4: eine schematische Querschnittsdarstellung einer herkömmlichen als Profilschienenführung ausgebildeten Linearführung.

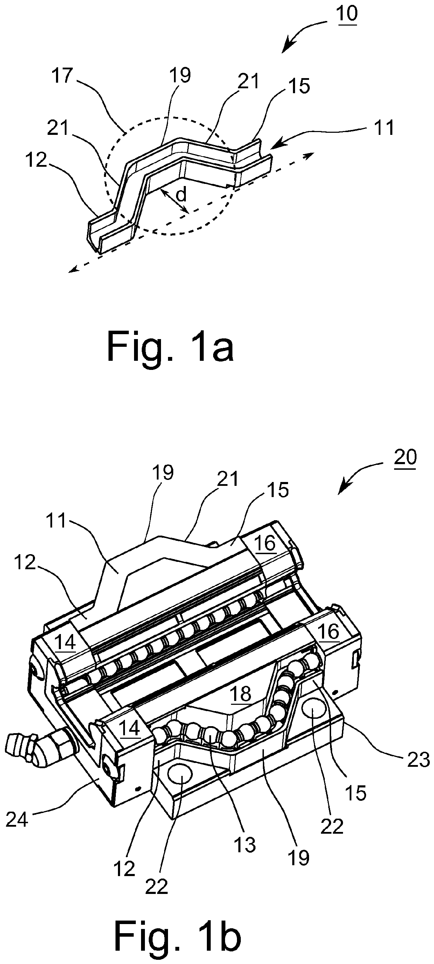

Fig. 1a zeigt eine Wälzkörperrückführung 10 für einen in Fig. 1b dargestellten Führungswagen 20 einer wälzgelagerten Linearführung.

Die Wälzkörperrückführung 10 weist einen Wälzkörperrücklaufkanal 11 mit einem ersten Endbereich 12 auf, in welchem Wälzkörper 13 (nicht gezeigt in Fig. 1a) aus einem ersten Wälzkörperumlenkbereich 14 einlaufen können, und einem zweiten Endbereich 15, aus welchem die Wälzkörper 13 in einen zweiten Wälzkörperumlenkbereich 16 auslaufen können. Der Wälzkörperrücklaufkanal 11 weist zwischen dem ersten und dem zweiten Endbereich 12, 15 in einem an dem Führungswagen 20 montiertem Zustand (siehe Fig. 1b) eine von einer (nicht dargestellten Führungsschiene) der Linearführung wegweisende Wölbung 17 auf, so dass der Wälzkörperrücklaufkanal 11 um eine steifigkeitserhöhende Anordnung 18 des Führungswagens 20 herum angeordnet werden kann.

Die beiden Endbereiche 12, 15 des Wälzkörperrücklaufkanals 11 können sich jeweils über eine vordefinierte Länge gerade entlang der Verschieberichtung erstrecken, bevor der dazwischen angeordnete gewölbte Bereich 17 beginnt. Dies bewirkt ein effizientes, insbesondere ein widerstandsarmes, Ein- und Auslaufen der Wälzkörper von den jeweiligen Umlenkbereichen 14, 16 in und aus den Wälzkörperrücklaufkanal 11. Der gewölbte Bereich 17 weist einen Mittenbereich 19 auf, der an seinen beiden Enden jeweils mittels eines Verbindungsabschnitts 21 mit dem jeweiligen Endbereich 12, 15 des Wälzkörperrücklaufkanals 11 verbunden ist. Dabei verläuft gemäß einem Aspekt der Erfindung der Mittenbereich 19 des Wälzkörperrücklaufkanals 11 in einem Abstand d parallel zu den beiden geraden Endbereichen 12, 15. Die beiden Verbindungsabschnitte 21 können schräg zu der Verschieberichtung angeordnet sein, so dass sich insgesamt ein trapezförmig gewölbter Bereich 17 ergibt, der eine widerstandsarme Rückführung der Wälzkörper erlaubt.

Obwohl in Fig. 1a ein trapezförmig gewölbter Bereich 17 mit schräg zur Verschieberichtung verlaufenden Verbindungsabschnitten 21 dargestellt ist, ist dies lediglich exemplarisch zu verstehen. Genauso gut könnten auch anders geformte und gleichwirkende Verbindungsabschnitte 21 bzw. Mittenbereiche 19 der Wölbung 17 vorgesehen sein. So könnte es sich beispielsweise bei dem gewölbten bzw. gekrümmten Abschnitt 17 auch um einen kreisbogenartig ausgebildeten Abschnitt handeln. Genauso gut können die Verbindungsabschnitte 21 kreisbogenförmig, polygonal oder S-förmig ausgebildet sein. Eine genaue geometrische Form der Wölbung bzw. Krümmung 17 des Wälzkörperrücklaufkanals 11 hängt letztendlich von der Geometrie des steifigkeitserhöhenden Abschnitts 18 des Führungswagens 20 ab.

Fig. 1b zeigt den Wälzkörperrücklaufkanal 11 in einem an bzw. mit dem Führungswagen 20 montierten Zustand. Dabei sind gemäß einem weiteren Aspekt der Erfindung die Endbereiche 12, 15 des Wälzkörperrücklaufkanals 11 derart angeordnet, dass sie innerhalb eines Bereichs des Führungswagens 20 zwischen links- und rechtsseitig der (nicht gezeigten) Führungsschiene der Linearführung angeordneter Befestigungsbohrungen 22 einer Montageebene bzw. -plattform 23 verlaufen. Das heißt, dass ein horizontaler Abstand der Endbereiche 12, 15 von sich links- und rechtsseitig der Führungsschiene gegenüberliegenden Wälzkörperrücklaufkanälen 11 geringer als ein horizontaler Abstand der Befestigungsbohrungen 22 der Montageplattform des Führungswagens 20 ist. Der Mittenbereich 19 eines montierten Wälzkörperrücklaufkanals 11 ist stattdessen um die steifigkeitserhöhende Anordnung, d.h. den massiven Mittenbereich 18 des Führungswagens 20 herum angeordnet, so dass dieser Bereich 19 in einer horizontalen Richtung senkrecht zur Führungsschiene außerhalb des schmalen Bereichs zwischen den Befestigungsbohrungen 22 verläuft. Gemäß einem Ausführungsbeispiel verläuft eine Außenwand des Mittenbereichs 19 des montierten Wälzkörperrücklaufkanals 11 bündig in einer Ebene mit einer Außenkante der Montageplattform des Führungswagens 20.

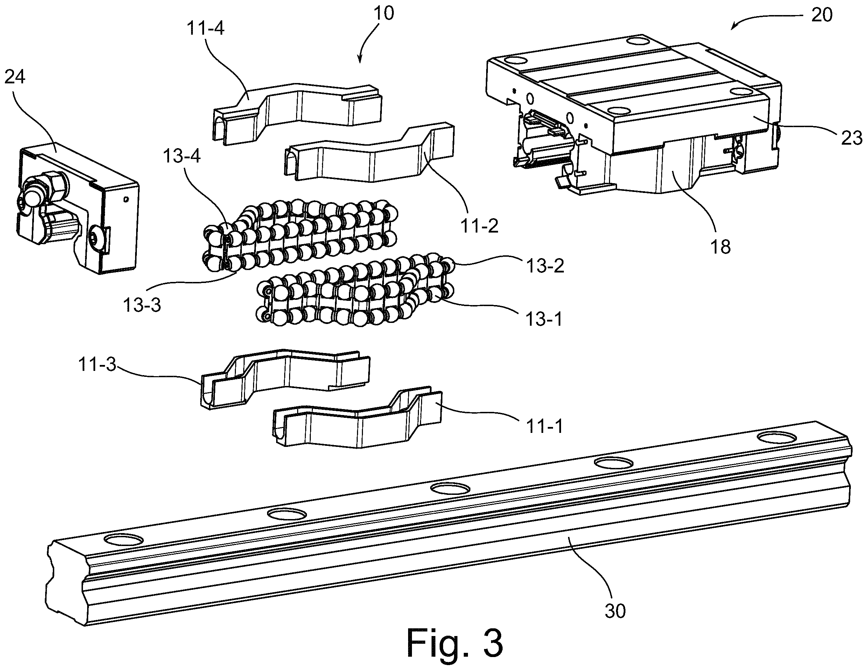

Der außerhalb des Korpus 18 des Führungswagens 20 herum anordenbare Wälzkörperrücklaufkanal 11 kann beispielsweise aus einem mittels eines Spritzgussverfahrens hergestellten Kunststoff gebildet sein. Denkbar sind aber auch andere Materialien wie beispielsweise Aluminium oder Stahlblech. Sogar ein schlauchartiges Material ist vorstellbar, in dem die Wälzkörper sich vollständig und entlang des schlauchartigen Materials relativ zu diesem bewegen, so dass der Wälzkörperrücklaufkanal 11 schlauchartig um den heraus- bzw. hervorstehenden Mittenbereich 18 des Führungswagens 20 herumgeführt werden kann. Bei dem gemäß den Fig. 1a und 1b zu einer Seite geöffnet dargestellten Wälzkörperrücklaufkanal handelt es sich beispielhaft um eine Ober- bzw. Unterschale eines Wälzkörperrücklaufkanals 11 für eine vierreihige Linearführung, wie es später noch anhand der Fig. 3 detaillierter beschrieben wird. Genauso gut könnte der Wälzkörperrücklaufkanal 11 aber auch ein einstückig ausgebildeter und rohr- oder schlauchförmig geschlossener Kanal sein.

Neben dem Wälzkörperrücklaufkanal 11 an sich, umfassen Ausführungsbeispiele der vorliegenden Erfindung auch den Führungswagen 20 zusammen mit der montierten Wälzkörperrückführung 10, 11, sowie es in Fig. 1b dargestellt ist, die den Führungswagen 20 in einer perspektivischen Ansicht von unten her zeigt.

In montiertem Zustand umfasst der Führungswagen 20 einen außerhalb seines Körpers bzw. Korpus verlaufenden Wälzkörperrücklaufkanal 11, mit einem ersten Endbereich 12, in welchem Wälzkörper 13 einer umlaufenden Wälzkörperreihe aus dem ersten stirnseitigen Wälzkörperumlenkbereich 14 einlaufen können, und mit einem zweiten Endbereich 15, aus welchem die Wälzkörper 13 in den zweiten, gegenüberliegenden stirnseitigen Wälzkörperumlenkbereich 16 auslaufen können. Der montierte Wälzkörperrücklaufkanal 11 weist zwischen seinem ersten und zweiten Endbereich 12, 15 eine von der Verschieberichtung wegweisende Wölbung 17 auf, so dass der Wälzkörperrücklaufkanal 11 um die zentrale, steifigkeitserhöhende Anordnung 18 des Führungswagens 20 herum angeordnet ist.

Die steifigkeitserhöhende Anordnung 18 des Führungswagens 20 umfasst gemäß einem Ausführungsbeispiel eine materialverstärkende Anordnung in einem zentralen Bereich unterhalb der Montageplattform des Führungswagens 20. Sie könnte aber auch anders, z.B. mittels bestimmter Verstrebungen, realisiert sein. In einer Richtung senkrecht zu der Verschieberichtung ist die steifigkeitserhöhende Anordnung 18 in einem Bereich zwischen einem führungsschienenseitigen Last- bzw. Tragkanal und dem außen geführten, gekrümmten Wälzkörperrücklaufkanal 11 angeordnet. Symmetrisch zur Führungsschiene kann die steifigkeitserhöhende Anordnung 18 beispielsweise links- und rechtsseitig zur Führungsschiene angeordnete, trapezförmig gebildete, massive Bauchbereiche aufweisen. Entsprechend dem Wälzkörperrücklaufkanal 11 sind aber auch hier andere, gleichwertige geometrische Formen denkbar. Anders ausgedrückt weist der Wälzkörperrücklaufkanal 11 eine Form auf, bei der dieser eine von einer Verbindungsgeraden im mathematischen Sinn zwischen dem Einlaufbereich 12 und dem Auslaufbereich 15 abweichende Form aufweist.

Bei der steifigkeitserhöhenden Anordnung 18 kann es sich beispielsweise um einen massiven Block des Materials des Führungswagens 20 handeln, der mit dem restlichen Korpus des Führungswagens einstückig ausgebildet sein kann, im Falle eines aus Stahl gefertigten Führungswagen also beispielsweise ein Stahlblock. Demgegenüber kann der außengeführte Wälzkörperrücklaufkanal 11 beispielsweise aus einem leichtgewichtigen und leicht zu montierenden Kunststoff gebildet sein. Links- und rechtsseitig der Führungsschiene können die Wälzkörperrücklaufkanalkanäle 11 beispielsweise durch stirnseitig an dem Führungswagen montierte Schmiermitteldepots 24, in den die Wälzkörper 13 vom Lastkanal zum Rücklaufkanal umgelenkt werden, gehalten werden.

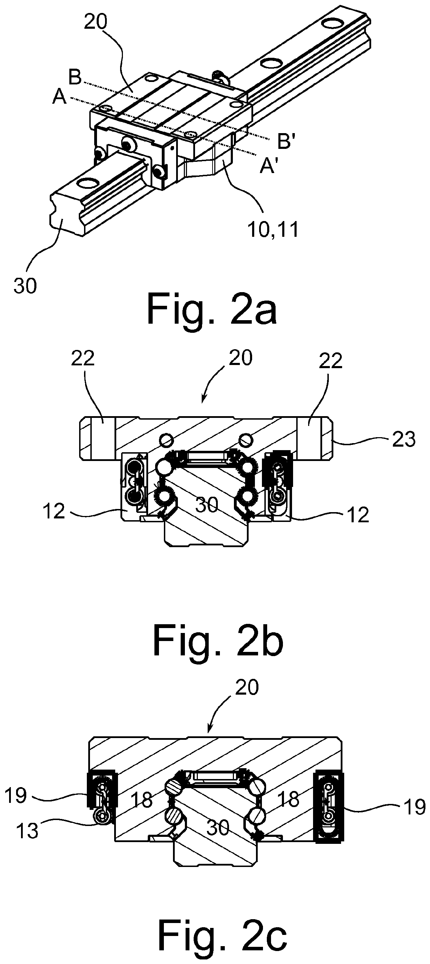

Der gekrümmte bzw. gewölbte Verlauf der Wälzkörperrückführung 10, 11 wird im Nachfolgenden anhand der Fig. 2a - 2c noch einmal verdeutlicht.

Fig. 2a zeigt eine isometrische Ansicht einer Linearführung mit einer Führungsschiene 30 und einem darauf geführten Führungswagen 20 mit montierter, außengeführter und gekrümmter Wälzkörperrückführung 10 gemäß einem Ausführungsbeispiel der vorliegenden Erfindung. Es sind zwei Schnittebenen AA' und BB' angedeutet, wobei die Schnittebene AA' durch links- und rechtsseitig der Führungsschiene gegenüberliegende Anschraubbohrungen 22 an einem stirnseitigen Ende der Montageplattform 23 des Führungswagens 20 verläuft und wobei die Schnittebene BB' durch den verstärkten Mittenbereich 18 des Führungswagen 20 verläuft.

Die Fig. 2a zeigt einen Querschnitt durch den auf der Profilschiene 30 montierten Führungswagen 20 durch dessen Anschraubbohrungsebene AA'. Gezeigt ist also ein Querschnitt durch den Führungswagen 20 samt montierter und beidseitig entlang der Profilschiene 30 verlaufender Wälzkörperrücklaufkanäle 11, wobei die Querschnittsebene AA' durch die Endbereiche 12 oder 15 des jeweiligen Wälzkörperrücklaufkanals 11 verläuft. In diesem stirnseitigen Endbereich weist der Führungswagen 20 unterhalb der Montageebene 23 eine geringe Erstreckung senkrecht zur Verschieberichtung auf, um Raum für Befestigungsschrauben in der Montageebene 23 des Führungswagens 20 zu gewährleisten. Wie es anhand der Fig. 2b dargestellt ist, können an den Endbereichen 12, 15 Befestigungsschrauben links- und rechtsseitig außen vorbei an den Endbereichen 12, 15 des Wälzkörperrücklaufkanals 11 geführt werden.

Ein Querschnitt durch die verstärkte Wagenmitte des auf der Profilschiene 30 laufenden Führungswagens 20 ist in der Fig. 2c dargestellt. Das heißt, dass der in Fig. 2c dargestellte Querschnitt BB' auch durch den nach außen gekrümmten bzw. gewölbten Mittenbereich 19 des Wälzkörperrücklaufkanals 11 verläuft. Dieser außen verlaufende und gekrümmte Mittenbereich 19 verläuft, wie es deutlich zu erkennen ist, samt den darin geführten Wälzkörpern 13, jeweils links- und rechtsseitig gekrümmt an der steifigkeitserhöhenden Anordnung 18 des Führungswagens 20 vorbei.

Diese Darstellungen illustrieren darüber hinaus, dass Ausführungsbeispiele es ermöglichen können, auch eine eine Steifigkeit des Führungswagens 20 erhöhende Struktur umzusetzen, wenn aufgrund konstruktiver, normativer oder anders gearteter Randbedingungen eine Redimensionierung eines Umlenkbereichs des Führungswagens 20 nicht möglich ist.

Als Wälzkörper 13 kommen, wie es eingangs bereits erwähnt wurde, beispielsweise Kugeln, Rollen, Nadeln oder andere Wälzkörper in Betracht.

Zusammenfassend soll anhand der explosionsartigen Darstellung der Fig. 3 nochmals das erfindungsgemäße Konzept zur Rückführung von Wälzkörpern in einem Führungswagen einer wälzgelagerten Linearführung dargestellt werden. Dabei werden in einem Wälzkörperkanal für eine endlos umlaufende Wälzkörperreihe die Wälzkörper auf einer gekrümmten Bahn um eine steifigkeitserhöhende Anordnung des Führungswagens herum zurückgeführt.

Dazu zeigt Fig. 3 eine Profilschiene 30, die zur Führung eines vierreihigen Führungswagens 20 entsprechend profiliert ist. Der Führungswagen 20 weist in einem zentralen Bereich unterhalb seiner Montageebene 23 einen zur Profilschiene 30 symmetrisch ausgebildeten steifigkeitserhöhenden Abschnitt 18 auf, um den herum außen geführte links- und rechtsseitige Wälzkörperrücklaufkanäle 11 angeordnet werden können. Ein rechtsseitiger Wälzkörperrücklaufkanal 11 für zwei vertikal übereinanderliegende unendlich umlaufende Wälzkörperreihen 13-1 und 13-2 weist eine Wälzkörperrücklaufkanalunterschale 11-1 und eine Wälzkörperrücklaufkanaloberschale 11-2 auf. Die Wälzkörperrücklaufkanalunterschale 11-1 und die Wälzkörperrücklaufkanaloberschale 11-2 bilden zusammen einen außengeführten, gekrümmten Wälzkörperrücklaufkanal 11 für die beiden vertikal übereinanderliegenden Wälzkörperreihen 13-1 und 13-2. Gleichermaßen verhält es sich für eine Wälzkörperrückführung auf einer gegenüberliegenden Seite der Profilschiene 30, bei der eine außengeführte, gekrümmte Wälzkörperrückführung für zwei vertikal übereinanderliegende Wälzkörperreihen 13-3 und 13-4 einen Wälzkörperrücklaufkanal 11 umfasst, der ebenfalls durch eine entsprechende Unterschale 11-3 und eine Oberschale 11-4 gebildet wird.

Die durch die jeweiligen Ober- und Unterschale 11-1 und 11-2 bzw. 11-3 und 11-4 gebildeten außenliegenden und gekrümmt verlaufenden Wälzkörperrücklaufkanäle 11 können unterhalb der Montageebene 23 außenliegend an den Führungswagen 20 montiert werden, so dass sie sich um den Versteifungsbereich 18 wölben. Dabei können sie beispielsweise mittels stirnseitig an den Führungswagen 20 zu montierende Schmiermittelreservoirs 24, in denen die umlaufenden Wälzkörper 13 der Wälzkörperreihen umgelenkt werden, gehalten werden.

Wie es insbesondere aus der Fig. 3 deutlich wird, können durch das erfindungsgemäße Konzept aufwändige Bohrungen durch den Führungswagen 20 bzw. dessen steifigkeitserhöhenden Mittenbereich 18 vermieden werden. Stattdessen werden die Wälzkörperreihen 13-1 bis 13-4 auf verblüffend einfache Weise mittels der außen geführten und um die steifigkeitserhöhende Anordnung 18 herum geführten Wälzkörperrückführung 10 zurückgeführt. Dadurch kann der Führungswagen 20 seine gewohnte Steifigkeit beibehalten.

Obwohl Ausführungsbeispiele der vorliegenden Erfindung anhand vierreihiger Linearführungen beschrieben wurden, ist die vorliegende Erfindung selbstverständlich nicht darauf beschränkt, sondern kann gleichermaßen auf zwei- bzw. mehrreihige Linearsysteme angewandt werden.

### Bezugszeichenliste

- 10: Wälzkörperrückführung
- 11: Wälzkörperrücklaufkanal
- 12: erster Endbereich des Wälzkörper Rücklaufkanal als
- 13: Wälzkörper einer umlaufenden Wälzkörperreihe
- 14: erster Wälzkörperumlenkbereich
- 15: zweiter Endbereich des Wälzkörperrücklaufkanals
- 16: zweiter Wälzkörper Umlenkbereich
- 17: von einer Führungsschiene wegweisende Wölbung des Wälzkörperrücklaufkanals
- 18: steifigkeitserhöhende Anordnung des Führungswagens
- 19: Mittenbereich des Wälzkörperrücklaufkanals
- 20: Führungswagen
- 21: Verbindungsabschnitt
- 22: Aschraubbohrungen für Befestigungsschrauben
- 23: Montageplattform
- 24: Schmiermittelreservoir
- 30: Profilschiene
- 40: Profilschienenführung
- 41: Kugel
- 42: Profilschiene
- 43: Führungswagen
- 44: Wälzkörperreihe
- 45: Wälzkörperkanal
- 46: Trag-, Lastbereich
- 47: Rücklaufbereich
- 48: Wälzkörperlaufbahn

## Patentansprüche

1. Eine Wälzkörperrückführung (10) für einen Führungswagen (20) einer wälzgelagerten Linearführung, mit folgenden Merkmalen:
einem Wälzkörperrücklaufkanal (11) mit einem ersten Endbereich (12), in welchen Wälzkörper (13) aus einem ersten Wälzkörperumlenkbereich (14) einlaufen können, und einem zweiten Endbereich (15), aus welchem die Wälzkörper (13) in einen zweiten Wälzkörperumlenkbereich (16) auslaufen können, wobei der Wälzkörperrücklaufkanal (11) zwischen dem ersten (12) und dem zweiten Endbereich (15) in montiertem Zustand eine von einer Führungsschiene (30) der Linearführung wegweisende Wölbung (17) aufweist, so dass der Wälzkörperrücklaufkanal (11) um eine steifigkeitserhöhende Anordnung (18) des Führungswagens (20) herum angeordnet werden kann,
**dadurch gekennzeichnet, dass** ein Mittenbereich (19) des Wälzkörperrücklaufkanals (11) in einem Abstand (d) parallel zu dessen beiden Endbereichen (12; 15) verläuft, und der Mittenbereich (19) an seinen beiden Enden jeweils mittels Verbindungsabschnitten (21) des Wälzkörperrücklaufkanals (11) mit dem jeweiligen Endbereich (12; 15) des Wälzkörperrücklaufkanals verbunden ist.

2. Die Wälzkörperrückführung (10) nach Anspruch 1, wobei der Wälzkörperrücklaufkanal (11) außerhalb eines Körpers des Führungswagens (20) herum angeordnet werden kann.

3. Die Wälzkörperrückführung (10) nach einem der vorhergehenden Ansprüche, wobei der Wälzkörperrücklaufkanal (11) aus einem Kunststoff gebildet ist.

4. Ein Führungswagen (20) für eine wälzgelagerte Linearführung, mit einem Wälzkörperkanal für eine endlos umlaufende Wälzkörperreihe, wobei der Wälzkörperkanal einen außerhalb eines Körpers des Führungswagens verlaufenden Wälzkörperrücklaufkanal (11) aufweist, mit einem ersten Endbereich (12), in welchen Wälzkörper (13) aus einem ersten Wälzkörperumlenkbereich (14) einlaufen können, und einem zweiten Endbereich (15), aus welchem die Wälzkörper in einen zweiten Wälzkörperumlenkbereich (16) auslaufen können, wobei der Wälzkörperrücklaufkanal (11) zwischen dem ersten und dem zweiten Endbereich (12; 15) eine von einer Führungsschiene (30) der Linearführung wegweisende Wölbung (17) aufweist, so dass der Wälzkörperrücklaufkanal (11) um eine steifigkeitserhöhende Anordnung (18) des Führungswagens herum angeordnet werden kann, **dadurch gekennzeichnet, dass** die Endbereiche (12; 15) des Wälzkörperrücklaufkanals innerhalb eines Bereichs des Führungswagens (20) zwischen links- und rechtsseitig der Führungsschiene (30) der Linearführung angeordneten Befestigungsbohrungen (22) verlaufen, und der Mittenbereich (19) des Wälzkörperrücklaufkanals (11) um die steifigkeitserhöhende Anordnung (18) des Führungswagens herum außerhalb des Bereichs verläuft.

5. Der Führungswagen (20) nach Anspruch 4, wobei die steifigkeitserhöhende Anordnung (18) eine materialverstärkende Anordnung in einem Bereich zwischen einem Lastkanal und dem Wälzkörperrücklaufkanal des Führungswagens umfasst.

6. Der Führungswagen (20) nach Anspruch 4 oder 5, wobei der außerhalb des Körpers des Führungswagens verlaufende Wälzkörperrücklaufkanal (11) aus einem Kunststoff gebildet ist.

7. Ein Verfahren zur Rückführung von Wälzkörpern (13) in einem Führungswagen (20) einer wälzgelagerten Linearführung, die einen Wälzkörperkanal für eine endlos umlaufende Wälzkörperreihe aufweist, wobei die Wälzkörper (13) der Wälzkörperreihe auf einer gekrümmten Bahn um eine steifigkeitserhöhende Anordnung (18) des Führungswagens (20) herum zurückgeführt werden, wobei zur Rückführung ein außerhalb eines Körpers des Führungswagens (20) verlaufender Wälzkörperrücklaufkanal (11) mit einem ersten Endbereich (12), in welchen die Wälzkörper (13) aus einem ersten Wälzkörperumlenkbereich (14) einlaufen können, und einem zweiten Endbereich (15), aus welchem die Wälzkörper (13) in einen zweiten Wälzkörperumlenkbereich (16) auslaufen können, angeordnet wird, wobei der Wälzkörperrücklaufkanal (11) zwischen dem ersten und dem zweiten Endbereich (12; 15) eine von einer Führungsschiene (30) der Linearführung wegweisende Wölbung (17) aufweist, um den Wälzkörperrücklaufkanal (11) um die steifigkeitserhöhende Anordnung (18) des Führungswagens (20) herum anzuordnen, **dadurch gekennzeichnet, dass** ein Mittenbereich (19) des Wälzkörperrücklaufkanals (11) in einem Abstand (d) parallel zu dessen beiden Endbereichen (12; 15) verläuft, und der Mittenbereich (19) an seinen beiden Enden jeweils mittels Verbindungsabschnitten (21) des Wälzkörperrücklaufkanals (11) mit dem jeweiligen Endbereich (12; 15) des Wälzkörperrücklaufkanals verbunden ist.

8. Ein Verfahren zur Rückführung von Wälzkörpern (13) in einem Führungswagen (20) einer wälzgelagerten Linearführung, die einen Wälzkörperkanal für eine endlos umlaufende Wälzkörperreihe aufweist, wobei die Wälzkörper (13) der Wälzkörperreihe auf einer gekrümmten Bahn um eine steifigkeitserhöhende Anordnung (18) des Führungswagens (20) herum zurückgeführt werden, wobei zur Rückführung ein außerhalb eines Körpers des Führungswagens (20) verlaufender Wälzkörperrücklaufkanal (11) mit einem ersten Endbereich (12), in welchen die Wälzkörper (13) aus einem ersten Wälzkörperumlenkbereich (14) einlaufen können, und einem zweiten Endbereich (15), aus welchem die Wälzkörper (13) in einen zweiten Wälzkörperumlenkbereich (16) auslaufen können, angeordnet wird, wobei der Wälzkörperrücklaufkanal (11) zwischen dem ersten und dem zweiten Endbereich (12; 15) eine von einer Führungsschiene (30) der Linearführung wegweisende Wölbung (17) aufweist, um den Wälzkörperrücklaufkanal (11) um die steifigkeitserhöhende Anordnung (18) des Führungswagens (20) herum anzuordnen, **dadurch gekennzeichnet, dass** die Endbereiche (12; 15) des Wälzkörperrücklaufkanals innerhalb eines Bereichs des Führungswagens (20) zwischen links- und rechtsseitig der Führungsschiene (30) der Linearführung angeordneten Befestigungsbohrungen (22) verlaufen, und der Mittenbereich (19) des Wälzkörperrücklaufkanals (11) um die steifigkeitserhöhende Anordnung (18) des Führungswagens herum außerhalb des Bereichs verläuft.

## Claims

1. Rolling-body-return means (10) for a guide carriage (20) of a linear roller-bearing-mounted guide, having the following features:
a rolling-body-return channel (11) with a first end region (12), into which rolling bodies (13) can enter from a first rolling-body-deflection region (14), and with a second end region (15), from which the rolling bodies (13) can exit into a second rolling-body-deflection region (16), wherein, in the installed state, the rolling-body-return channel (11), between the first (12) and the second (15) end regions, has a curved portion (17) oriented away from a guide rail (30) of the linear guide, and therefore the rolling-body-return channel (11) can be arranged around a rigidity-increasing arrangement (18) of the guide carriage (20),
**characterized in that**
a central region (19) of the rolling-body-return channel (11) runs at a distance (d) from, and parallel to, the two end regions (12; 15) of said channel, and, at its two ends, the central region (19) is connected to the respective end region (12; 15) of the rolling-body-return channel (11) in each case by means of connecting portions (21) of the rolling-body-return channel.

2. Rolling-body-return means (10) according to Claim 1, wherein the rolling-body-return channel (11) can be arranged around the outside of a body of the guide carriage (20).

3. Rolling-body-return means (10) according to either of the preceding claims, wherein the rolling-body-return channel (11) is formed from a plastic material.

4. Guide carriage (20) for a linear roller-bearing-mounted guide, having a rolling-body channel for an endlessly circulating row of rolling bodies, wherein the rolling-body channel has a rolling-body-return channel (11) which runs outside a body of the guide carriage and has a first end region (12), into which rolling bodies (13) can enter from a first rolling-body-deflection region (14), and a second end region (15), from which the rolling bodies can exit into a second rolling-body-deflection region (16), wherein the rolling-body-return channel (11), between the first and the second end regions (12; 15), has a curved portion (17) oriented away from a guide rail (30) of the linear guide, and therefore the rolling-body-return channel (11) can be arranged around a rigidity-increasing arrangement (18) of the guide carriage,
**characterized in that**
the end regions (12; 15) of the rolling-body-return channel run, within a region of the guide carriage (20), between fastening bores (22), which are arranged to the left and right of the guide rail (30) of the linear guide, and the central region (19) of the rolling-body-return channel (11) runs around the rigidity-increasing arrangement (18) of the guide carriage, outside said region.

5. Guide carriage (20) according to Claim 4, wherein the rigidity-increasing arrangement (18) comprises a material-reinforcing arrangement in a region between a load channel and the rolling-body-return channel of the guide carriage.

6. Guide carriage (20) according to Claim 4 or 5, wherein the rolling-body-return channel (11), which runs outside the body of the guide carriage, is formed from a plastic material.

7. Method for returning rolling bodies (13) in a guide carriage (20) of a linear roller-bearing-mounted guide, having a rolling-body channel for an endlessly circulating row of rolling bodies, wherein the rolling bodies (13) of the row of rolling bodies are returned on a curved path around a rigidity-increasing arrangement (18) of the guide carriage (20), wherein a rolling-body-return channel (11) which runs outside a body of the guide carriage (20) and has a first end region (12), into which the rolling bodies (13) can enter from a first rolling-body-deflection region (14), and a second end region (15), from which the rolling bodies (13) can exit into a second rolling-body-deflection region (16), is provided for return purposes, wherein the rolling-body-return channel (11), between the first and the second end regions (12; 15), has a curved portion (17) oriented away from a guide rail (30) of the linear guide, in order for the rolling-body-return channel (11) to be arranged around the rigidity-increasing arrangement (18) of the guide carriage (20),
**characterized in that**
a central region (19) of the rolling-body-return channel (11) runs at a distance (d) from, and parallel to, the two end regions (12; 15) of said channel, and, at its two ends, the central region (19) is connected to the respective end region (12; 15) of the rolling-body-return channel (11) in each case by means of connecting portions (21) of the rolling-body-return channel.

8. Method for returning rolling bodies (13) in a guide carriage (20) of a linear roller-bearing-mounted guide, having a rolling-body channel for an endlessly circulating row of rolling bodies, wherein the rolling bodies (13) of the row of rolling bodies are returned on a curved path around a rigidity-increasing arrangement (18) of the guide carriage (20), wherein a rolling-body-return channel (11) which runs outside a body of the guide carriage (20) and has a first end region (12), into which the rolling bodies (13) can enter from a first rolling-body-deflection region (14), and a second end region (15), from which the rolling bodies (13) can exit into a second rolling-body-deflection region (16), is provided for return purposes, wherein the rolling-body-return channel (11), between the first and the second end regions (12; 15), has a curved portion (17) oriented away from a guide rail (30) of the linear guide, in order for the rolling-body-return channel (11) to be arranged around the rigidity-increasing arrangement (18) of the guide carriage (20),
**characterized in that**
the end regions (12; 15) of the rolling-body-return channel run, within a region of the guide carriage (20), between fastening bores (22), which are arranged to the left and right of the guide rail (30) of the linear guide, and the central region (19) of the rolling-body-return channel (11) runs around the rigidity-increasing arrangement (18) of the guide carriage, outside said region.

## Revendications

1. Récupération de corps de roulement (10) pour un chariot de guidage (20) d'un palier à roulement linéaire, présentant les caractéristiques suivantes:
un canal de retour de corps de roulement (11) avec une première région d'extrémité (12), dans laquelle des corps de roulement (13) provenant d'une région de déviation de corps de roulement (14) peuvent s'engager, et avec une seconde région d'extrémité (15), à partir de laquelle les corps de roulement (13) peuvent entrer dans une seconde région de déviation de corps de roulement (16), dans lequel le canal de retour de corps de roulement (11) présente entre la première (12) et la seconde (15) régions d'extrémité à l'état monté une courbure (17) s'écartant d'un rail de guidage (30) du guidage linéaire, de telle manière que le canal de retour de corps de roulement (11) puisse être disposé autour d'un agencement (18) du chariot de guidage (20) pour augmenter la rigidité,
**caractérisée en ce qu'**une région moyenne (19) du canal de retour de corps de roulement (11) s'étend à une distance (d) parallèlement à ses deux régions d'extrémité (12; 15), et la région moyenne (19) est reliée à ses deux extrémités respectivement par des parties de liaison (21) du canal de retour de corps de roulement (11) à la région d'extrémité respective (12; 15) du canal de retour de corps de roulement (11).

2. Récupération de corps de roulement (10) selon la revendication 1, dans laquelle le canal de retour de corps de roulement (11) peut être disposé tout autour à l'extérieur d'un corps du chariot de guidage (20).

3. Récupération de corps de roulement (10) selon l'une quelconque des revendications précédentes, dans laquelle le canal de retour de corps de roulement (11) est formé en une matière plastique.

4. Chariot de guidage (20) pour un palier à roulement linéaire, avec un canal de corps de roulement pour une rangée de corps de roulement tournant sans fin, dans lequel le canal de corps de roulement présente un canal de retour de corps de roulement (11) s'étendant à l'extérieur d'un corps du chariot de guidage, avec une première région d'extrémité (12), dans laquelle des corps de roulement (13) provenant d'une région de déviation de corps de roulement (14) peuvent s'engager, et avec une seconde région d'extrémité (15), à partir de laquelle les corps de roulement (13) peuvent entrer dans une seconde région de déviation de corps de roulement (16), dans lequel le canal de retour de corps de roulement (11) présente entre la première et la seconde (12; 15) régions d'extrémité une courbure (17) s'écartant d'un rail de guidage (30) du guidage linéaire, de telle manière que le canal de retour de corps de roulement (11) puisse être disposé autour d'un agencement (18) du chariot de guidage (20) pour augmenter la rigidité,
**caractérisé en ce que** les régions d'extrémité (12; 15) du canal de retour de corps de roulement s'étendent à l'intérieur d'une région du chariot de guidage (20) entre des trous de fixation (22) disposés à gauche et à droite du rail de guidage (30) du guidage linéaire, et la région moyenne (19) du canal de retour de corps de roulement (11) s'étend à l'extérieur de la région autour de l'agencement (18) du chariot de guidage pour augmenter la rigidité.

5. Chariot de guidage (20) selon la revendication 4, dans lequel l'agencement pour augmenter la rigidité (18) comprend un agencement de renforcement de matière dans une région entre un canal de charge et le canal de retour de corps de roulement du chariot de guidage.

6. Chariot de guidage (20) selon une revendication 4 ou 5, dans lequel le canal de retour de corps de roulement (11) s'étendant à l'extérieur du corps du chariot de guidage est formé en une matière plastique.

7. Procédé de récupération de corps de roulement (13) dans un chariot de guidage (20) d'un palier à roulement linéaire, qui présente un canal de corps de roulement pour une rangée de corps de roulement tournant sans fin, dans lequel on renvoie les corps de roulement (13) de la rangée de corps de roulement sur un chemin courbe autour d'un agencement (18) du chariot de guidage (20) pour augmenter la rigidité, dans lequel on dispose pour la récupération un canal de retour de corps de roulement (11) s'étendant à l'extérieur d'un corps du chariot de guidage (20) avec une première région d'extrémité (12), dans laquelle des corps de roulement (13) provenant d'une région de déviation de corps de roulement (14) peuvent s'engager, et avec une seconde région d'extrémité (15), à partir de laquelle les corps de roulement (13) peuvent entrer dans une seconde région de déviation de corps de roulement (16), dans lequel le canal de retour de corps de roulement (11) présente entre la première et la seconde (12; 15) régions d'extrémité une courbure (17) s'écartant d'un rail de guidage (30) du guidage linéaire, afin de disposer le canal de retour de corps de roulement (11) autour de l'agencement (18) du chariot de guidage (20) pour augmenter la rigidité,
**caractérisé en ce qu'**une région moyenne (19) du canal de retour de corps de roulement (11) s'étend à une distance (d) parallèlement à ses deux régions d'extrémité (12; 15), et la région moyenne (19) est reliée à ses deux extrémités respectivement par des parties de liaison (21) du canal de retour de corps de roulement (11) à la région d'extrémité respective (12; 15) du canal de retour de corps de roulement.

8. Procédé de récupération de corps de roulement (13) dans un chariot de guidage (20) d'un palier à roulement linéaire, qui présente un canal de corps de roulement pour une rangée de corps de roulement tournant sans fin, dans lequel on renvoie les corps de roulement (13) de la rangée de corps de roulement sur un chemin courbe autour d'un agencement (18) du chariot de guidage (20) pour augmenter la rigidité, dans lequel on dispose pour la récupération un canal de retour de corps de roulement (11) s'étendant à l'extérieur d'un corps du chariot de guidage (20) avec une première région d'extrémité (12), dans laquelle des corps de roulement (13) provenant d'une région de déviation de corps de roulement (14) peuvent s'engager, et avec une seconde région d'extrémité (15), à partir de laquelle les corps de roulement (13) peuvent entrer dans une seconde région de déviation de corps de roulement (16), dans lequel le canal de retour de corps de roulement (11) présente entre la première et la seconde (12; 15) régions d'extrémité une courbure (17) s'écartant d'un rail de guidage (30) du guidage linéaire, afin de disposer le canal de retour de corps de roulement (11) autour de l'agencement (18) du chariot de guidage (20) pour augmenter la rigidité,
**caractérisé en ce que** les régions d'extrémité (12; 15) du canal de retour de corps de roulement s'étendent à l'intérieur d'une région du chariot de guidage (20) entre des trous de fixation (22) disposés à gauche et à droite du rail de guidage (30) du guidage linéaire, et la région moyenne (19) du canal de retour de corps de roulement (11) s'étend à l'extérieur de la région autour de l'agencement (18) du chariot de guidage pour augmenter la rigidité.
